# EUROPÄISCHE PATENTSCHRIFT

(11) **EP 3 714 138 B1**
(45) Veröffentlichungstag und Bekanntmachung des Hinweises auf die Patenterteilung: **09.06.2021**
(21) Anmeldenummer: 18789065.2
(22) Anmeldetag: 15.10.2018
(51) Int. Cl.: F01N 3/00

(54) **HEIZVORRICHTUNG, VERFAHREN ZUR HERSTELLUNG EINER HEIZVORRICHTUNG**
HEATING DEVICE, METHOD FOR PRODUCING A HEATING DEVICE
DISPOSITIF DE CHAUFFAGE ET SON PROCÉDÉ DE FABRICATION

(30) Priorität: 23.11.2017 DE 102017220909
(43) Veröffentlichungstag der Anmeldung: 30.09.2020
(73) Patentinhaber: Robert Bosch GmbH, 70442 Stuttgart (DE)
(72) Erfinder: SCHWARZ, Mathias, 73240 Wendlingen Am Neckar (DE); ZEMAN, Petr, 70469 Stuttgart (DE); RUIGROK VAN DE WERVE, Jan, 70184 Stuttgart (DE)
(86) Internationale Anmeldenummer: PCT/EP2018/078054
(87) Internationale Veröffentlichungsnummer: WO 2019/101441

(56) Entgegenhaltungen:
- DE-A1-102011 084 962
- DE-A1-102014 212 544

## Beschreibung

Die Erfindung betrifft eine Heizvorrichtung zur Beheizung eines Vorratstanks für einen Betriebs- und/oder Hilfsstoff in einem Abgasnachbehandlungssystem einer Brennkraftmaschine mit den Merkmalen des Oberbegriffs des Anspruchs 1. Ferner betrifft die Erfindung ein Verfahren zur Herstellung einer Heizvorrichtung mit den Merkmalen des Oberbegriffs des Anspruchs 11.

### Stand der Technik

Flüssigkeiten, wie beispielsweise Wasser oder wässrige Lösungen, gefrieren bei tiefen Außentemperaturen. Werden sie an Bord eines Kraftfahrzeugs in einem Vorratsbehälter bevorratet, gilt es Maßnahmen zu treffen, die ein Gefrieren der Flüssigkeit verhindern bzw. ein Auftauen der Flüssigkeit ermöglichen, so dass zumindest ein Teil der bevorrateten Flüssigkeitsmenge bei Bedarf einsatzbereit ist. Derartige Maßnahmen sehen beispielsweise die Verwendung einer elektrischen Heizvorrichtung vor, die zur Erwärmung der bevorrateten Flüssigkeit im oder am Vorratsbehälter befestigt wird. Dabei gilt es sicherzustellen, dass die Heizvorrichtung nicht in Kontakt mit der Flüssigkeit gelangt, um eine Korrosion und/oder einen Kurzschluss zu verhindern. In der Regel wird daher die Heizvorrichtung durch Umspritzen mit Kunststoff oder durch eine Einhausung vollständig gegenüber der Flüssigkeit abgedichtet.

Aus der DE 10 2014 212 544 A1 ist eine Heizung zur Temperierung eines Vorratstanks für einen Betriebs- und/oder Hilfsstoff eines Abgasnachbehandlungssystems einer Brennkraftmaschine bekannt, die mindestens einen elektrisch beheizbaren Heizwiderstand und einen Wärmeleitkörper umfasst. Der Heizwiderstand liegt zur elektrischen Kontaktierung sowie zur Wärmeleitung mit einer ersten Seite an einer Kontaktfläche des Wärmeleitkörpers an. Eine vom Wärmeleitkörper wegweisende zweite Seite ist mit einer Stromschiene elektrisch leitend verbunden. Der Heizwiderstand und die Stromschiene weisen zumindest bereichsweise eine isolierende Innenumspritzung auf, so dass ein Heizmodul ausgebildet wird. Weiters sind das Heizmodul und der Wärmeleitkörper zumindest bereichsweise von einer Außenumspritzung umgeben.

Das Umspritzen ist nicht unproblematisch. Insbesondere kann es zu einer Verschiebung des zu umspritzenden Heizwiderstands bzw. Heizmoduls aufgrund hoher Spritzdrücke kommen. Die erforderliche elektrische Kontaktierung und/oder eine zuverlässige Wärmeübertragung ist bzw. sind in diesem Fall nicht mehr gewährleistet.

In der DE 10 2014 212 544 A1 wird daher bereits vorgeschlagen, den Heizwiderstand bzw. das Heizmoduls mittels Federelemente vorzuspannen, so dass eine dauerhaft zuverlässige elektrische Kontaktierung sowie eine optimale thermische Ankopplung des Heizwiderstands an den Wärmeleitkörper gegeben sein soll. Die Vorspannkraft der Feder kann jedoch über die Zeit abnehmen, so dass der thermische Widerstand zwischen dem Wärmeleitkörper und dem Heizwiderstand einer Veränderung unterliegt, insbesondere steigt. In der Folge nimmt die Heizleistung ab. Ferner besteht die Gefahr, dass bei Unterschreiten einer Mindestkraft zur Vorspannung des Heizwiderstands gegen den Wärmeleitkörper der elektrische Kontakt aufgehoben wird, so dass die Heizvorrichtung komplett ausfällt. Werden zur Kompensation der aufgrund von Relaxation über die Zeit nachlassenden Vorspannkraft der Feder zu Beginn überhöhte Vorspannkräfte gewählt, kann der Heizwiderstand Schaden nehmen, insbesondere brechen, wenn es sich beispielsweise um einen Heizwiderstand aus Keramik handelt.

Die vorstehend genannten Nachteile können sich auch dann ergeben, wenn der Heizwiderstand nicht mittels einer Feder gegen den Wärmeleitkörper vorgespannt, sondern im oder am Wärmeleitkörper verstemmt bzw. verpresst wird. Diese Ausführungsform geht beispielhaft aus der DE 10 2011 084 962 A1 hervor. Auch hier treten Relaxationserscheinungen auf, die es durch hohe Kräfte beim Verstemmen bzw. Verpressen zu kompensieren gilt, so dass der Heizwiderstand leicht zerbrechen kann.

Der vorliegenden Erfindung liegt die Aufgabe zugrunde, eine Heizvorrichtung zur Beheizung eines Vorratstanks für einen Betriebs- und/oder Hilfsstoff in einem Abgasnachbehandlungssystem einer Brennkraftmaschine anzugeben, die eine hohe Heizleistung aufweist und somit eine effiziente Beheizung des Vorratstanks ermöglicht. Die Heizleistung soll insbesondere dadurch gesteigert werden, dass die Anbindung mindestens eines elektrisch beheizbaren Heizwiderstands an einen Wärmeleitkörper möglichst relaxationsfrei ist.

Die Aufgabe wird gelöst durch die Heizvorrichtung mit den Merkmalen des Anspruchs 1. Vorteilhafte Weiterbildungen der Erfindung sind den Unteransprüchen zu entnehmen. Ferner wird das Verfahren mit den Merkmalen des Anspruchs 11 vorgeschlagen.

### Offenbarung der Erfindung

Die zur Beheizung eines Vorratstanks für einen Betriebs- und/oder Hilfsstoff in einem Abgasnachbehandlungssystem einer Brennkraftmaschine vorgeschlagene Heizvorrichtung umfasst mindestens einen elektrisch beheizbaren Heizwiderstand und mindestens einen Wärmeleitkörper. Erfindungsgemäß ist vorgesehen, dass zwei Wärmeleitkörper einen Spalt begrenzen, in dem der Heizwiderstand angeordnet ist. Zudem sind zur Optimierung der thermischen Ankopplung des Heizwiderstands an beide Wärmeleitkörper diese mittels Magnete miteinander verspannt.

Die erfindungsgemäße Heizvorrichtung weist demnach mindestens zwei Wärmeleitkörper auf. Diese sind vorzugsweise gleich oder zumindest gespiegelt ausgebildet, so dass die Herstellungskosten verringert werden. Der mindestens eine elektrisch beheizbare Heizwiderstand ist in einem Spalt zwischen den beiden Wärmeleitkörpern angeordnet, so dass der Heizwiderstand beidseits in elektrisch leitendem Kontakt mit jeweils einem Wärmeleitkörper steht. Das heißt, dass der Heizwiderstand beidseitig bzw. symmetrisch angebunden ist. Entsprechend steigt die Heizleistung der Heizvorrichtung, so dass der Vorratstank mittels der vorgeschlagenen Heizvorrichtung effizienter beheizbar ist.

Zur Optimierung der thermischen Ankopplung des Heizwiderstands an die beidseits anliegenden Wärmeleitkörper sind diese miteinander verspannt. Die Verspannung wird mittels Magnete bewirkt, so dass die zum Verspannen erforderliche Kraft genau einstellbar ist. Diese bleibt auch über die Zeit unverändert, insbesondere relaxationsfrei, so dass die eingangs in Zusammenhang mit der Relaxation genannten Probleme nicht auftreten. Die mittels der Magnete bewirkte Vorspannkraft ist präzise quantifizierbar und reproduzierbar, so dass Schäden am Heizwiderstand vermeidbar sind.

Aufgrund der beidseitigen Kontaktierung ist der Betriebspunkt des Heizwiderstands optimal und dementsprechend die Heizleistung höher. Das heißt, dass eine Effizienzsteigerung bewirkt wird, die es möglich mach, die Anzahl der Heizwiderstände zu reduzieren. Denn die zur Verfügung stehende elektrische Energie wird optimal ausgenutzt. Zugleich sinkt die thermische Last auf den Heizwiderstand, so dass dessen Lebensdauer steigt.

Die beiden mittels der Magnete miteinander verspannten Wärmeleitkörper werden vorzugsweise jeweils von außen elektrisch kontaktiert, so dass der Stromfluss über den mindestens einen zwischen den beiden Wärmeleitkörpern angeordneten Heizwiderstand erfolgt.

Gemäß einer bevorzugten Ausführungsform der Erfindung ist in jeden Wärmeleitkörper mindestens ein Magnet integriert und derart angeordnet, dass ihm am Spalt ein Magnet des jeweils anderen Wärmeleitkörpers gegenüber liegt. Dadurch ist eine optimale Ausnutzung der Magnetkräfte sichergestellt. Die Magnete können beispielsweise in Ausnehmungen der Wärmeleitkörper eingesetzt sein, die spaltseitig nur durch eine dünne Wand vom Spalt getrennt werden. Auf diese Weise sind besonders hohe Magnetkräfte erzielbar.

Ferner wird vorgeschlagen, dass zwischen zwei sich am Spalt gegenüber liegenden Magneten der Heizwiderstand angeordnet ist. Diese Anordnung ermöglicht besonders kompaktbauende Ausführungen der Heizvorrichtung. Zugleich ist sichergestellt, dass der Heizwiderstand über die Magnetkraft der Magnete maximal vorgespannt wird.

Alternativ kann der Heizwiderstand versetzt zu den sich am Spalt gegenüberliegenden Magneten angeordnet sein. In diesem Fall ist vorzugsweise der Heizwiderstand mittig in Bezug auf mindesten zwei Magnetpaare angeordnet, so dass der Heizwiderstand möglichst gleichmäßig vorgespannt bzw. belastet wird.

Sofern zwischen zwei sich am Spalt gegenüber liegenden Magneten kein Heizwiderstand angeordnet ist, kann ein dritter Magnet zwischen den beiden Magneten angeordnet sein. Auf diese Weise kann die Magnetkraft und damit die Vorspannkraft weiter erhöht werden. Dies hat zur Folge, dass der Anpressdruck des Heizwiderstands gegen die beiden Wärmeleitkörper steigt und damit auch die Heizleistung. Der dritte Magnet ist gegenüber den Wärmeleitkörpern elektrisch isoliert, um einen Kurzschluss zu verhindern. Die elektrische Isolierung kann beispielsweise durch eine elektrisch isolierende Beschichtung auf dem dritten Magneten bewirkt werden.

Bevorzugt weist mindestens ein Wärmeleitkörper eine den Spalt vergrößernde Vertiefung zur Aufnahme des dritten Magneten auf. Der dritte Magnet ist somit gegen eine Verschiebung gegenüber dem Wärmeleitkörper gesichert. Dies wirkt sich insbesondere bei einem nachträglichen Umspritzen der Heizvorrichtung mit Kunststoff als Vorteil aus, da selbst hohe Spritzdrücke die Position des dritten Magneten nicht gefährden können.

Alternativ oder ergänzend wird vorgeschlagen, dass in den Spalt zwischen den beiden Wärmeleitkörpern ein elektrisch isolierender Körper angeordnet ist. Der elektrisch isolierende Körper stellt eine dauerhafte Trennung der beiden Wärmeleitköper sicher. Der elektrisch isolierende Körper kann insbesondere spaltfüllend oder zumindest annähernd spaltfüllend ausgeführt sein, so dass vorzugsweise der Spalt nach außen geschlossen ist. Dadurch wird beim späteren Umspritzen der Heizvorrichtung mit Kunststoff ein Eindringen der heißen Schmelze in den Spalt verhindern. Denn diese könnte den Heizwiderstand beschädigen. Beispielsweise könnte der Heizwiderstand aufgrund der hohen Temperatur der Schmelze Risse bekommen oder Brechen. Sofern der elektrisch isolierende Körper spaltfüllend ausgeführt ist, besteht er vorzugsweise aus einem weichen Material, so dass er möglichst kraftfrei verformbar ist. Dadurch ist sichergestellt, dass der Kraftfluss über den Heizwiderstand erfolgt, um eine hohe Anpresskraft zu erzielen.

Der elektrisch isolierende Körper kann dabei derart weitergebildet werden, dass er in mindestens eine Ausnehmung eines Wärmeleitkörpers eingreift. Auf diese Weise wird ein Formschluss erreicht, der eine Verschiebung des elektrisch isolierenden Körpers gegenüber dem Wärmeleitkörper verhindert. Der Formschluss kann beispielsweise über mindestens einen Dorn auf einer Kontaktfläche des elektrisch isolierenden Körpers mit dem Wärmeleitkörper realisiert werden, der in eine entsprechende Ausnehmung des Wärmeleitkörpers eingreift. Alternativ oder ergänzend kann der elektrisch isolierende Körper dergestalt sein, dass er den zwischen den beiden Wärmeleitkörpern ausgebildeten Spalt nach außen verschließt.

In Weiterbildung der Erfindung wird vorgeschlagen, dass die Heizvorrichtung mit Kunststoff, vorzugsweise mit einem thermoplastischen Kunststoff, wie beispielsweise Polyethylen und/oder Polypropylen, umspritzt ist. Die Umspritzung stellt eine schützende Umhüllung dar, die den mindestens einen Heizwiderstand vor äußeren Einwirkungen, wie beispielsweise aggressive Medien, schützt. Um ein solches Medium handelt es sich auch bei der wässrigen Harnstofflösung.

Bevorzugt ist der elektrisch beheizbare Heizwiderstand im Wesentlichen plattenförmig ausgeführt und wird durch eine PTC-Keramik oder einen elektrisch leitfähigen gefüllten Kunststoff ausgebildet. Derartige Heizwiderstände besitzen einen nicht linearen elektrischen Heizwiderstand. Wird ein elektrisch leitfähiger gefüllter Kunststoff zur Ausbildung des Heizwiderstands verwendet, kann dieser mindestens eine Geometrie aufweisen, mittels welcher ein Formschluss mit mindestens einem Wärmeleitköper herstellbar ist. Der Wärmeleitkörper besitzt in diesem Fall eine an die Geometrie angepasste Ausnehmung, mit welcher die Geometrie in Eingriff bringbar ist. Ferner kann der elektrisch leitfähige gefüllte Kunststoff spaltfüllend oder annähernd spaltfüllend in den Spalt zwischen den beiden Wärmeleitkörpern eingebracht werden, so dass eine spaltfüllende Isolierung ggf. entbehrlich ist. Ferner sinkt die Leistungsdichte an den Kontaktflächen des Heizwiderstands mit den Wärmeleitkörpern und damit auch die Sensitivität des Heizwiderstands gegenüber der Anpresskraft.

Die Wärmeleitkörper sind vorzugsweise aus Metall, insbesondere aus Aluminium oder einer Aluminiumlegierung, gefertigt. Denn Metalle, wie beispielsweise Aluminium, weisen eine besonders hohe Wärmeleitfähigkeit auf.

Zur Lösung der eingangs genannten Aufgabe wird ferner ein Verfahren zur Herstellung einer Heizvorrichtung zur Beheizung eines Vorratstanks für einen Betriebs- und/oder Hilfsstoff in einem Abgasnachbehandlungssystem einer Brennkraftmaschine vorgeschlagen. Bei dem Verfahren wird mindestens ein elektrisch beheizbarer Heizwiderstand in elektrisch leitendem Kontakt mit mindestens einem Wärmeleitkörper gebracht. Erfindungsgemäß wird der Heizwiderstand in einen Spalt zwischen zwei Wärmeleitkörper eingesetzt und die beiden Wärmeleitkörper werden zur Optimierung der thermischen Ankopplung des Heizwiderstands an beide Wärmeleitkörper mittels Magnete miteinander verspannt.

Die Magnetkraft der Magnete ist genau bestimmbar, so dass hierüber auch die Anpresskraft vorgebbar ist, mittels welcher der Heizwiderstand gegen die beiden Wärmeleitkörper gepresst wird. Zudem ist die Anpresskraft über die Lebensdauer der Heizvorrichtung konstant, was folglich auch für die Heizleistung gilt. Durch Anordnung des Heizwiderstands zwischen zwei Wärmeleitkörpern wird zudem eine symmetrische Anbindung des Heizwiderstands erreicht, die zu einer Steigerung der Heizleistung führt. Die nach dem erfindungsgemäßen Verfahren hergestellte Heizvorrichtung ist somit besonders effizient.

Das vorgeschlagene Verfahren ist insbesondere zur Herstellung der zuvor beschriebenen erfindungsgemäßen Heizvorrichtung geeignet.

Bevorzugt wird demnach in jeden Wärmeleitkörper mindestens ein Magnet integriert und derart angeordnet, dass ihm am Spalt ein Magnet des jeweils anderen Wärmeleitkörpers gegenüber liegt.

Des Weiteren bevorzugt wird zwischen zwei sich am Spalt gegenüber liegenden Magneten der Heizwiderstand angeordnet.

Alternativ kann zwischen zwei sich am Spalt gegenüber liegenden Magneten ein dritter Magnet angeordnet werden, der gegenüber den Wärmeleitkörpern elektrisch isoliert ist, beispielsweise durch eine elektrisch isolierende Beschichtung.

Ferner wird vorgeschlagen, dass der dritte Magnet in einer Vertiefung mindestens eines Wärmeleitkörpers eingesetzt wird, so dass er über den Wärmeleitkörper lagefixiert ist.

In den Spalt zwischen den beiden Wärmeleitkörpern kann zudem ein elektrisch isolierender Körper angeordnet werden. Dieser kann insbesondere spaltfüllend bzw. den Spalt nach außen abschließend angeordnet werden, so dass beim nachträglichen Umspritzen der Heizvorrichtung mit Kunststoff keine heiße Schmelze in den Spalt gelangt, durch welche der Heizwiderstand Schaden nehmen könnte.

Darüber hinaus kann der elektrisch isolierende Körper in Eingriff mit mindestens einer Ausnehmung eines Wärmeleitkörpers gebracht werden, so dass ein Formschluss erzielt wird, der die Lage der Bauteile zueinander fixiert.

Abschließend wird vorzugsweise die Heizvorrichtung mit Kunststoff, vorzugsweise mit einem thermoplastischen Kunststoff, wie beispielsweise Polyethylen und/oder Polypropylen, umspritzt.

Als elektrisch beheizbarer Heizwiderstand wird vorzugsweise eine PTC-Keramik oder ein Körper aus einem elektrisch leitfähigen gefüllten Kunststoff verwendet.

Bevorzugte Ausführungsformen der Erfindung werden nachfolgend anhand der beigefügten Zeichnungen näher erläutert. Diese zeigen:
Fig. 1 einen schematischen Schnitt durch eine erfindungsgemäße Heizvorrichtung gemäß einer ersten bevorzugten Ausführungsform,
Fig. 2 einen schematischen Schnitt durch eine erfindungsgemäße Heizvorrichtung gemäß einer zweiten bevorzugten Ausführungsform,
Fig. 3 einen schematischen Schnitt durch die Heizvorrichtung der Fig. 2 ergänzt um eine weitere Magnetanordnung,
Fig. 4 einen schematischen Schnitt durch die Heizvorrichtung der Fig.3 mit Umspritzung,
Fig. 5 einen schematischen Schnitt durch eine erfindungsgemäße Heizvorrichtung gemäß einer dritten bevorzugten Ausführungsform,
Fig. 6 einen schematischen Schnitt durch eine erfindungsgemäße Heizvorrichtung gemäß einer vierten bevorzugten Ausführungsform,
Fig. 7 a)-d) jeweils Draufsichten auf einen Wärmeleitkörper einer erfindungsgemäßen Heizvorrichtung mit Heizwiderständen und Magneten in unterschiedlicher Anordnung,
Fig. 8 a)-i) den Ablauf des erfindungsgemäßen Verfahrens zur Herstellung einer Heizvorrichtung und
Fig. 9 a)-c) jeweils ein Diagramm zur Darstellung der Abhängigkeiten zwischen der Anpresskraft p, der Heizleistung P_{Heiz} und der Zeit t.

### Ausführliche Beschreibung der Zeichnungen

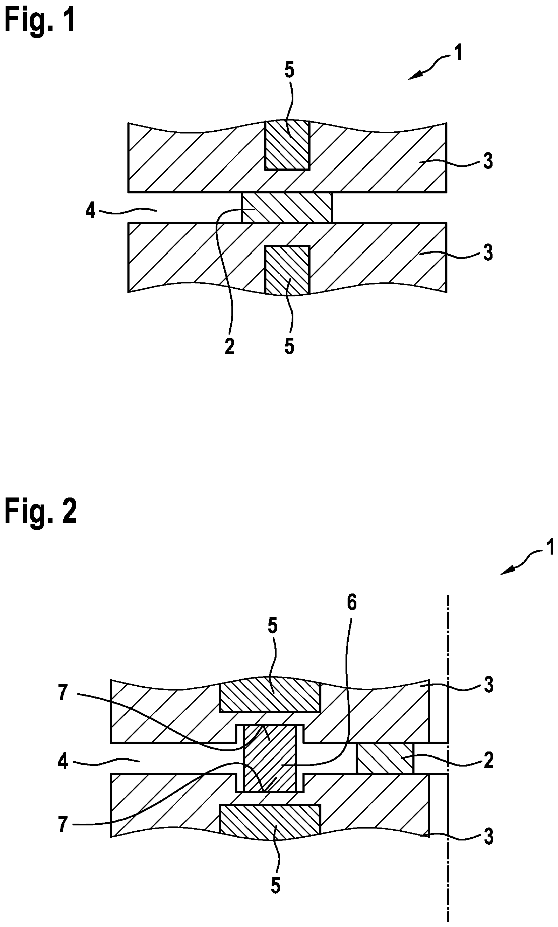

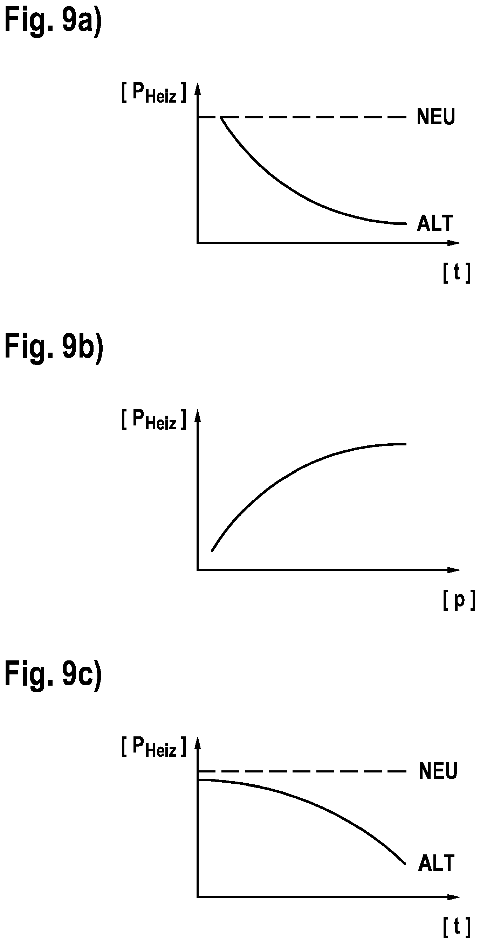

Der Fig. 1 ist eine erste bevorzugte Ausführungsform einer erfindungsgemäßen Heizvorrichtung 1 zu entnehmen. Die Heizvorrichtung 1 umfasst einen plattenförmigen Heizwiderstand 2, beispielsweise in Form einer PTC-Keramik, der in einem Spalt 4 zwischen zwei gleichartigen Wärmeleitkörpern 3 angeordnet ist. In jeden Wärmeleitkörper 3 ist ein Magnet 5 integriert und derart platziert, dass sich die Magnete 5 an dem Spalt 4 gegenüberliegen. Mittels der Magnete 5 werden die beiden Wärmeleitkörper 3 gegeneinander verspannt, so dass der Heizwiderstand 2 zwischen den beiden Wärmeleitkörpern 3 eingespannt wird. Auf diese Weise wird eine hohe Anpresskraft p und damit eine hohe Heizleistung P_{Heiz} erreicht (siehe Fig. 9b). Da keine Relaxation stattfindet, lässt die Anpresskraft p über die Zeit t auch nicht nach (Fig. 9a), so dass die hohe Heizleistung P_{Heiz} dauerhaft erhalten bleibt (siehe Fig. 9c).

In der Fig. 1 ist der Heizwiderstand 2 zwischen den beiden Magneten 5 angeordnet. Dies ist jedoch nicht zwingend erforderlich. Beispielsweise kann der Heizwiderstand - wie beispielhaft in der Fig. 2 dargestellt - auch versetzt zu den Magneten 5 angeordnet sein.

In der Fig. 2 ist anstelle des Heizelements 2 ein dritter Magnet 6 zwischen den beiden Magneten 5 platziert. Dieser trägt zu einer Erhöhung der Magnetkraft und damit zu einer Erhöhung der Anpresskraft p bei. Der dritte Magnet 6 ist dabei in Vertiefungen 7 der beiden Wärmeleitkörper 3 aufgenommen, so dass eine Lagefixierung des dritten Magneten 6 bewirkt wird.

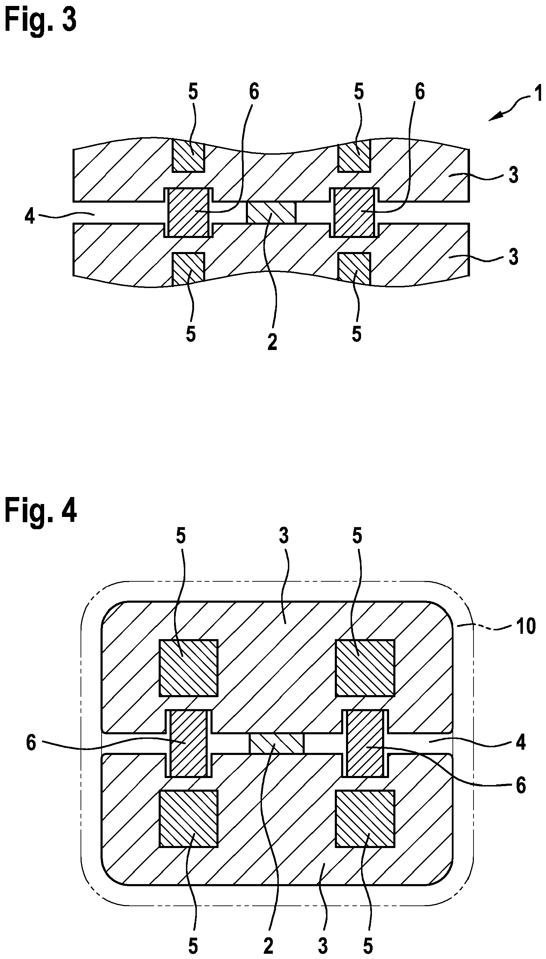

Bei einer versetzten Anordnung des Heizwiderstands 2 gegenüber den Magneten 5 ist vorzugsweise mindestens ein weiteres Magnetenpaar vorgesehen, das weiterhin vorzugsweise im gleichen Abstand zum Heizwiderstand 2 angeordnet wird, so dass dieser gleichmäßig belastet wird (siehe Fig. 3).

Wie beispielhaft in der Fig. 4 dargestellt, kann die Heizvorrichtung 1 eine Umspritzung mit Kunststoff 10 aufweisen. Die Umspritzung schützt den Heizwiderstand vor äußeren Einwirkungen, insbesondere vor aggressiven Medien.

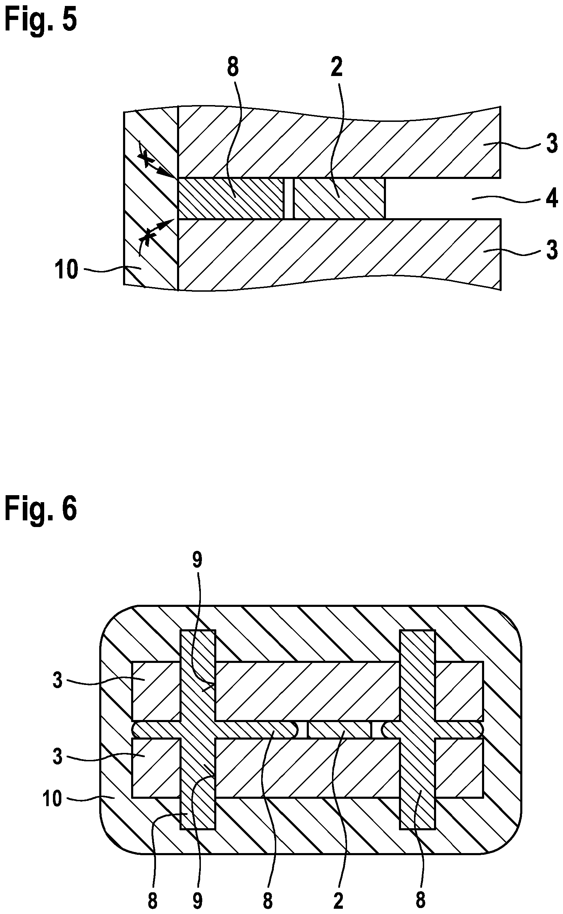

Um zu verhindern, dass beim Umspritzen heiße Schmelze in den Spalt 4 gelangt, kann in den Spalt 4 ein elektrisch isolierender Körper 8 eingesetzt werden. Diese Ausführungsform ist in der Fig. 5 beispielhaft dargestellt. Die Magnete 5 sind der Einfachheit halber nicht dargestellt.

Der elektrisch isolierende Körper 8 kann zudem derart zwischen den beiden Wärmeleitkörpern 3 angeordnet werden, dass er in mindestens eine Ausnehmung 9 eines Wärmeleitkörpers 3 eingreift (siehe Fig. 6). Zudem können mehrere elektrisch isolierende Körper 8 im Spalt 4 vorgesehen werden. Die Magnete 5 sind auch in der Fig. 6 der Einfachheit halber nicht dargestellt.

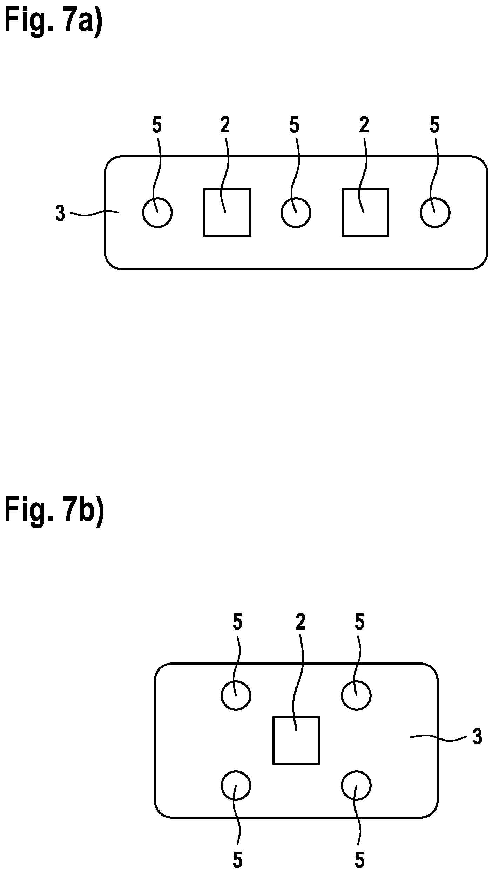

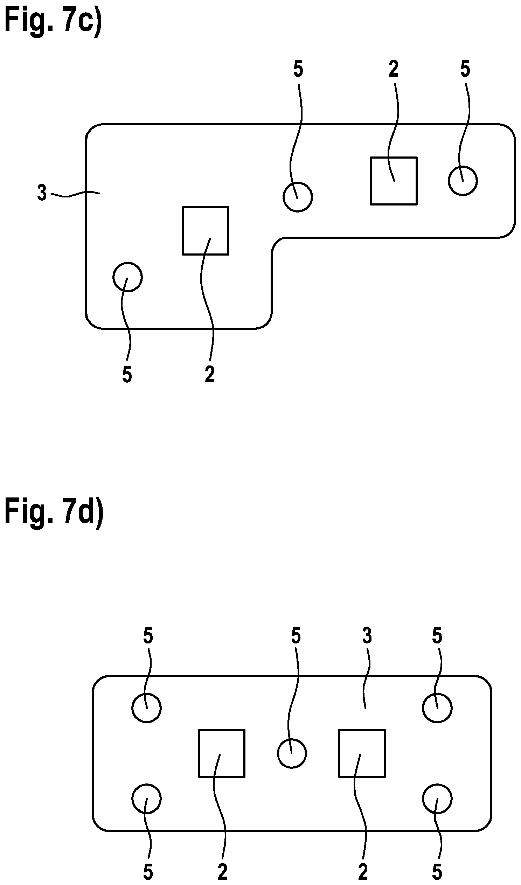

Unterschiedliche Anordnungen von Heizwiderständen 2 und Magneten 5 sind beispielhaft in den Figuren 7a bis 7d dargestellt, wobei diese nur einen kleinen Ausschnitt aus einer Vielzahl von Variationsmöglichkeiten zeigen.

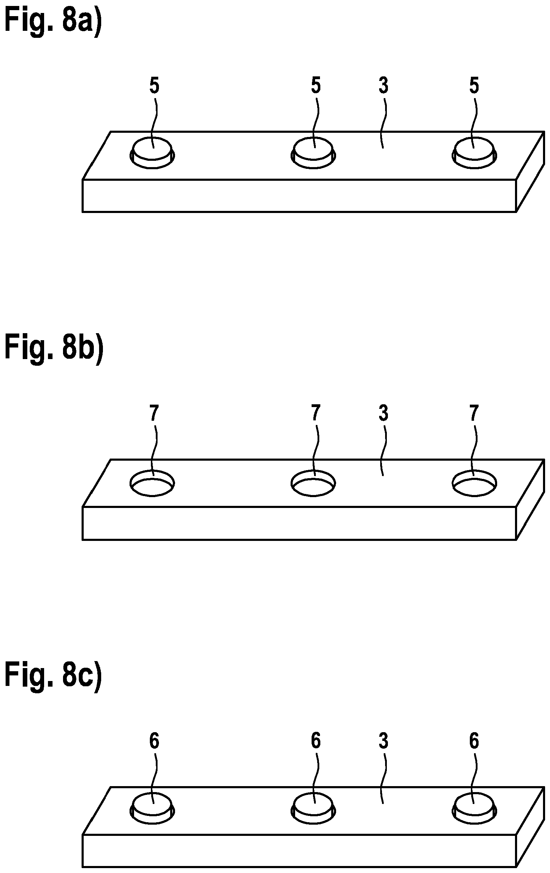

Anhand der Figuren 8a bis 8i wird nachfolgend das erfindungsgemäße Verfahren zur Herstellung einer Heizvorrichtung 1 erläutert.

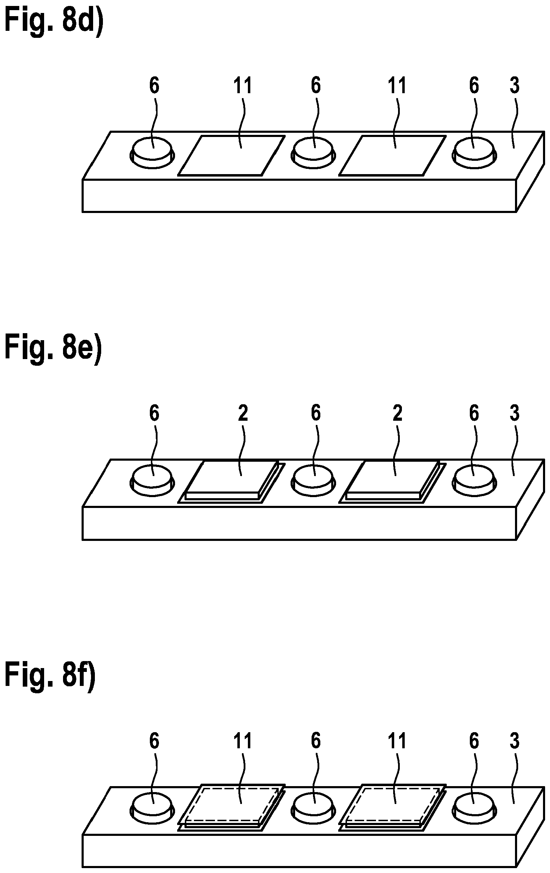

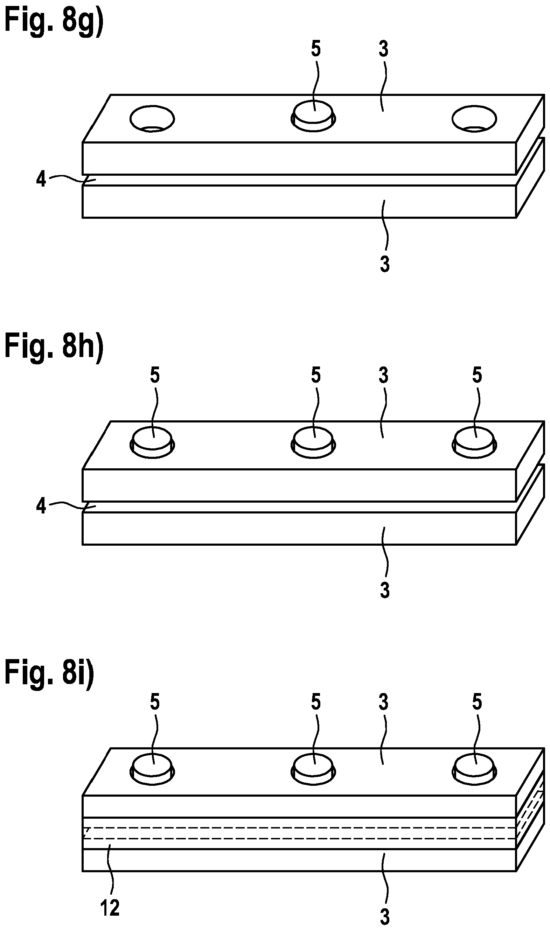

Wie in der Fig. 8a dargestellt, werden in einen ersten Wärmeleitkörper 3 Magnete 5 eingesetzt, vorliegend drei Magnete 5. Der Wärmeleitkörper 3 weist hierzu drei Ausnehmungen auf. Anschließend wird der Wärmeleitkörper 3 gedreht, so dass die Magnete 5 unten zu liegen kommen (Fig. 8b). Auf der nunmehr oben liegenden Seite weist der Wärmeleitkörper 3 drei Vertiefungen 7 auf, in die drei weitere Magnete 6 eingesetzt werden (Fig. 8c). Zwischen jeweils zwei Magneten 6 wird dann jeweils eine Wärmeleitfolie 11 auf den Wärmeleitkörper 3 aufgelegt (Fig. 8d). Hierauf werden dann plattenförmige Heizwiderstände 2 angeordnet (Fig. 8e) und anschließend wieder mit einer Wärmeleitfolie 11 abgedeckt (Fig. 8f). Auf diese Anordnung wird dann ein zweiter Wärmeleitkörper 3 aufgesetzt (Fig. 8g), der gleich dem ersten Wärmeleitkörper 3 ausgebildet ist. Das heißt, dass auch dieser Ausnehmungen zur Aufnahme von Magneten 5 besitzt. In diese werden demnach entsprechende Magnete 5 eingesetzt (Fig. 8h). Die in mehreren Ebenen angeordneten Magnete 5, 6 bewirken, dass die beiden Wärmeleitkörper 3 gegeneinander verspannt werden. Die beiden Heizwiderstände werden dabei zwischen den beiden Wärmeleitkörpern 3 eingespannt, so dass eine optimale thermische Anbindung an die beiden Wärmeleitkörper 3 erreicht wird. Der zwischen den beiden Wärmeleitkörpern 3 verbleibende Spalt 4 kann vor dem Umspritzen mit Kunststoff 10 mi einem umlaufend angebrachten Klebeband 12 verschlossen werden (Fig. 8i), so dass keine heiße Schmelze in den Spalt 4 gelangt.

## Patentansprüche

1. Heizvorrichtung (1) zur Beheizung eines Vorratstanks für einen Betriebsund/oder Hilfsstoff in einem Abgasnachbehandlungssystem einer Brennkraftmaschine, umfassend mindestens einen elektrisch beheizbaren Heizwiderstand (2) und mindestens einen Wärmeleitkörper (3),
**dadurch gekennzeichnet, dass** zwei Wärmeleitkörper (3) einen Spalt (4) begrenzen, in dem der Heizwiderstand (2) angeordnet ist, und die beiden Wärmeleitkörper (3) zur Optimierung der thermischen Ankopplung des Heizwiderstands (2) an beide Wärmeleitkörper (3) mittels Magnete (5) miteinander verspannt sind.

2. Heizvorrichtung (1) nach Anspruch 1,
**dadurch gekennzeichnet, dass** in jeden Wärmeleitkörper (3) mindestens ein Magnet (5) integriert und derart angeordnet ist, dass ihm am Spalt (4) ein Magnet (5) des jeweils anderen Wärmeleitkörpers (3) gegenüber liegt.

3. Heizvorrichtung (1) nach Anspruch 1 oder 2,
**dadurch gekennzeichnet, dass** zwischen zwei sich am Spalt (4) gegenüber liegenden Magneten (5) der Heizwiderstand (2) angeordnet ist.

4. Heizvorrichtung (1) nach einem der vorhergehenden Ansprüche,
**dadurch gekennzeichnet, dass** zwischen zwei sich am Spalt (4) gegenüber liegenden Magneten (5) ein dritter Magnet (6) angeordnet ist, der gegenüber den Wärmeleitkörpern (3) elektrisch isoliert ist, beispielsweise durch eine elektrisch isolierende Beschichtung.

5. Heizvorrichtung (1) nach Anspruch 4,
**dadurch gekennzeichnet, dass** mindestens ein Wärmeleitkörper (3) eine den Spalt (4) vergrößernde Vertiefung (7) zur Aufnahme des dritten Magneten (6) aufweist.

6. Heizvorrichtung (1) nach einem der vorhergehenden Ansprüche,
**dadurch gekennzeichnet, dass** in den Spalt (4) zwischen den beiden Wärmeleitkörpern (3) ein elektrisch isolierender Körper (8) angeordnet ist.

7. Heizvorrichtung (1) nach Anspruch 6,
**dadurch gekennzeichnet, dass** der elektrisch isolierende Körper (8) in mindestens eine Ausnehmung (9) eines Wärmeleitkörpers (3) eingreift und/oder den Spalt (4) nach außen verschließt.

8. Heizvorrichtung (1) nach einem der vorhergehenden Ansprüche,
**dadurch gekennzeichnet, dass** die Heizvorrichtung (1) mit Kunststoff (10), vorzugsweise mit einem thermoplastischen Kunststoff, wie beispielsweise Polyethylen und/oder Polypropylen, umspritzt ist.

9. Heizvorrichtung (1) nach einem der vorhergehenden Ansprüche,
**dadurch gekennzeichnet, dass** der elektrisch beheizbare Heizwiderstand (2) im Wesentlichen plattenförmig ausgeführt ist und durch eine PTC-Keramik oder einen elektrisch leitfähigen gefüllten Kunststoff ausgebildet wird.

10. Heizvorrichtung (1) nach einem der vorhergehenden Ansprüche,
**dadurch gekennzeichnet, dass** die Wärmeleitkörper (3) aus Metall, insbesondere aus Aluminium oder einer Aluminiumlegierung, gefertigt sind.

11. Verfahren zur Herstellung einer Heizvorrichtung (1) zur Beheizung eines Vorratstanks für einen Betriebs- und/oder Hilfsstoff in einem Abgasnachbehandlungssystem einer Brennkraftmaschine, bei dem mindestens ein elektrisch beheizbarer Heizwiderstand (2) in elektrisch leitendem Kontakt mit mindestens einem Wärmeleitkörper (3) gebracht wird,
**dadurch gekennzeichnet, dass** der Heizwiderstand (2) in einen Spalt (4) zwischen zwei Wärmeleitkörper (3) eingesetzt wird und die beiden Wärmeleitkörper (3) zur Optimierung der thermischen Ankopplung des Heizwiderstands (2) an beide Wärmeleitkörper (3) mittels Magnete (5) miteinander verspannt werden.

## Claims

1. Heating apparatus (1) for heating a storage tank for an operating and/or auxiliary substance in an exhaust-gas aftertreatment system of an internal combustion engine, comprising at least one electrically heatable heating resistor (2) and at least one thermally conductive body (3),
**characterized in that** two thermally conductive bodies (3) delimit a gap (4) in which the heating resistor (2) is arranged, and the two thermally conductive bodies (3) are braced with one another by means of magnets (5) in order to optimize the thermal coupling of the heating resistor (2) to the two thermally conductive bodies (3).

2. Heating apparatus (1) according to Claim 1,
**characterized in that** at least one magnet (5) is integrated in each thermally conductive body (3) and is arranged in such a way that a magnet (5) of the respectively other thermally conductive body (3) is situated opposite it across the gap (4).

3. Heating apparatus (1) according to Claim 1 or 2,
**characterized in that** the heating resistor (2) is arranged between two magnets (5) which are situated opposite each other across the gap (4).

4. Heating apparatus (1) according to one of the preceding claims,
**characterized in that** a third magnet (6) is arranged between two magnets (5) which are situated opposite each other across the gap (4), which third magnet is electrically insulated from the thermally conductive bodies (3), for example by an electrically insulating coating.

5. Heating apparatus (1) according to Claim 4,
**characterized in that** at least one thermally conductive body (3) has a recess (7), which increases the size of the gap (4), for receiving the third magnet (6).

6. Heating apparatus (1) according to one of the preceding claims,
**characterized in that** an electrically insulating body (8) is arranged in the gap (4) between the two thermally conductive bodies (3).

7. Heating apparatus (1) according to Claim 6,
**characterized in that** the electrically insulating body (8) engages into at least one recess (9) of a thermally conductive body (3) and/or closes the gap (4) to the outside.

8. Heating apparatus (1) according to one of the preceding claims,
**characterized in that** the heating apparatus (1) is encapsulated by injection moulding with plastic (10), preferably with a thermoplastic, such as polyethylene and/or polypropylene for example.

9. Heating apparatus (1) according to one of the preceding claims,
**characterized in that** the electrically heatable heating resistor (2) is designed in a substantially plate-like manner and is formed by a PTC ceramic or an electrically conductive filled plastic.

10. Heating apparatus (1) according to one of the preceding claims,
**characterized in that** the thermally conductive bodies (3) are produced from metal, in particular from aluminium or an aluminium alloy.

11. Method for producing a heating apparatus (1) for heating a storage tank for an operating and/or auxiliary substance in an exhaust-gas aftertreatment system of an internal combustion engine, in which method at least one electrically heatable heating resistor (2) is brought into electrically conductive contact with at least one thermally conductive body (3),
**characterized in that** the heating resistor (2) is inserted into a gap (4) between two thermally conductive bodies (3) and the two thermally conductive bodies (3) are braced with one another by means of magnets (5) in order to optimize the thermal coupling of the heating resistor (2) to the two thermally conductive bodies (3).

## Revendications

1. Dispositif de chauffage (1) destiné à chauffer un réservoir de stockage d'une substance de service et/ou substance auxiliaire dans un système de post-traitement de gaz d'échappement d'un moteur à combustion interne, ledit dispositif comprenant au moins une résistance chauffante (2) pouvant être chauffée électriquement et au moins un corps thermoconducteur (3),
**caractérisé en ce que** deux corps thermoconducteurs (3) délimitent une fente (4) dans laquelle la résistance chauffante (2) est disposée, et les deux corps thermoconducteurs (3) sont précontraints l'un avec l'autre au moyen d'aimants (5) pour optimiser le couplage thermique entre la résistance chauffante (2) et les deux corps thermoconducteurs (3).

2. Dispositif de chauffage (1) selon la revendication 1,
**caractérisé en ce qu'**au moins un aimant (5) est intégré dans chaque corps thermoconducteur (3) et est disposé de telle sorte qu'un aimant (5) de l'autre corps thermoconducteur (3) lui est opposé au niveau de la fente (4).

3. Dispositif de chauffage (1) selon la revendication 1 ou 2,
**caractérisé en ce que** la résistance chauffante (2) est disposée entre deux aimants (5) opposés l'un à l'autre au niveau de la fente (4).

4. Dispositif de chauffage (1) selon l'une des revendications précédentes,
**caractérisé en ce qu'**un troisième aimant (6) est disposé entre deux aimants (5) opposés l'un à l'autre au niveau de la fente (4) et est isolé électriquement des corps thermoconducteurs (3), par exemple au moyen d'un revêtement électriquement isolant.

5. Dispositif de chauffage (1) selon la revendication 4,
**caractérisé en ce qu'**au moins un corps thermoconducteur (3) comporte une dépression (7) agrandissant la fente (4) et destinée à recevoir le troisième aimant (6).

6. Dispositif de chauffage (1) selon l'une des revendications précédentes,
**caractérisé en ce qu'**un corps électriquement isolant (8) est disposé dans la fente (4) ménagée entre les deux corps thermoconducteurs (3).

7. Dispositif de chauffage (1) selon la revendication 6,
**caractérisé en ce que** le corps électriquement isolant (8) s'engage dans au moins un évidement (9) d'un corps thermoconducteur (3) et/ou ferme la fente (4) par rapport à l'extérieur.

8. Dispositif de chauffage (1) selon l'une des revendications précédentes,
**caractérisé en ce que** le dispositif de chauffage (1) est encapsulé avec une matière synthétique (10), de préférence avec une matière thermoplastique telle que du polyéthylène et/ou du polypropylène.

9. Dispositif de chauffage (1) selon l'une des revendications précédentes,
**caractérisé en ce que** la résistance chauffante (2) pouvant être chauffée électriquement est réalisée sensiblement sous la forme d'une plaque et est formée par une céramique PTC ou une matière synthétique chargée électriquement conductrice.

10. Dispositif de chauffage (1) selon l'une des revendications précédentes,
**caractérisé en ce que** les corps thermoconducteurs (3) sont en métal, notamment en aluminium ou en un alliage d'aluminium.

11. Procédé de fabrication d'un dispositif de chauffage (1) destiné à chauffer un réservoir de stockage d'une substance de service et/ou d'une substance auxiliaire dans un système de post-traitement de gaz d'échappement d'un moteur à combustion interne, procédé dans lequel au moins une résistance chauffante (2) pouvant être chauffée électriquement est mise en contact électriquement conducteur avec au moins un corps thermoconducteur (3),
**caractérisé en ce que** la résistance chauffante (2) est insérée dans une fente (4) ménagée entre deux corps thermoconducteurs (3) et les deux corps thermoconducteurs (3) sont précontraints l'un avec l'autre au moyen d'aimants (5) pour optimiser le couplage thermique entre la résistance chauffante (2) et les deux corps thermoconducteurs (3).
